# EUROPEAN PATENT APPLICATION

(11) **EP 3 272 625 A1**
(43) Date of publication of application: **24.01.2018**
(21) Application number: 17176220.6
(22) Date of filing: 15.06.2017
(51) Int. Cl.: B62D 5/12, B62D 3/12, F15B 15/24

(54) **HYDRAULIC CYLINDER FOR UTILITY VEHICLE**

(30) Priority: 14.07.2016 GB 201612239
(71) Applicant: AGCO International GmbH, 8212 Neuhausen am Rheinfall (CH)
(72) Inventor: Wintergerst, Christoph, 87616 Marktoberdorf (DE); Glaser, Bernd, 87616 Marktoberdorf (DE)
(74) Representative: AGCO Intellectual Property Department

(57) **Abstract**

A distance ring (32) is provided for constraining retraction of a hydraulic cylinder in applications including a steering rod (45) in a vehicle suspension. The distance ring comprises an outer body (32a) of a rigid material lined by an inner body (32b) of flexible material, with the inner body having an opening of substantially identical dimension to that of the cross-section of the steering rod (45). A vehicle steering cylinder assembly including the distance ring mounts it together with a number of similar but unlined rings to adjust permitted travel of a steering cylinder rod.

## Description

The present invention relates to distance ring components and hydraulic cylinders employing distance ring components to adjust the available extent of retraction, and more particularly to systems, including steering systems for utility vehicles such as self-propelled agricultural machines, incorporating such components.

Known vehicle steering systems commonly include a steering cylinder mounted to the vehicle chassis and having a steering rod which is controllably extended from or retracted into the steering cylinder in response to operation of the vehicles steering control. At the free end of the steering rod, away from the cylinder, the rod is pivotably attached (either directly or through a track rod) to a pivotable steering housing on which is rotatably mounted a wheel hub, such that extension and retraction of the steering rod will cause the steering housing and hub to pivot about a substantially vertical axis.

In order to prevent contact between a wheel mounted on the hub with the chassis or bodywork of a vehicle to which the assembly is mounted, the steering rod may be provided with a projecting stop body at a predetermined distance along its length: as the steering rod is retracted into the steering cylinder, the stop body impacts the cylinder (or an adjacent part of the vehicle structure) to prevent further retraction and thereby limit the extent of turn of the wheel hub.

As will be recognised, it is desirable to position the stop body such as to maximise the available extent of turn of the wheel hub in order to reduce turning circle of the vehicle. In conventional road-going vehicles, this is a straightforward matter as the size of the vehicle wheels will generally be known. For utility vehicles such as agricultural tractors, where the size of wheel and/or tire mounted to the hub may be routinely changed, the stop body should be positioned by reference to the largest wheel/tire combination to be mounted to avoid wheel/body impact at maximum angle of turn. However, this penalises the minimum turning circle that would otherwise be available when a smaller wheel/tire combination is fitted.

To address this issue, it has been proposed to mount one or more distance rings, in the form of planar U-shaped or annular bodies, about the steering rod between the stop body and steering cylinder. With the stop body positioned to permit minimum turning circle without wheel/body impact when zero or one distance rings are used, it is a relatively simple matter to add further distance rings to further limit the available extent of steering rod retraction when larger wheel/tire combinations are fitted.

An example of a cylinder using a variable number of distance rings (in the form of U-shaped shims) to control the extent of retraction is described in US Patent 7,044,047. Further examples are shown in US Patent 6,314,860 and International patent application WO 2016/074963 A1.

In accordance with a first aspect of the invention there is provided a distance ring for constraining movement of a rod in a hydraulic cylinder, the distance ring comprising a planar body of a rigid material having a first opening of greater dimension than the cross-section of a rod with which it is to be used, characterised in that within the first opening is attached a second planar body of flexible material, the second planar body having a second opening of substantially identical dimension to that of the cross-section of the rod. The flexible lining provided by the second planar body may be used to provide a dirt seal for a hydraulic cylinder to which it is fitted.

The first and second planar bodies are suitably coplanar and may be annular, or the first and second openings may extend to the edge of their respective planar bodies such that the distance ring is U-shaped.

The rigid material of the distance ring may be steel. The flexible material may be rubber attached to the rigid material by chemical bonding or vulcanisation.

According to a further aspect of the present invention there is provided a hydraulic cylinder assembly, comprising:
- a rod controllably movable into and out of a cylinder;
- a first distance ring according to the first aspect of the invention mounted to the cylinder about the rod; and
- one or more further distance rings, not having a second planar body of flexible material, mounted to the cylinder about the rod in abutting relationship with the first distance ring; wherein the rod includes an outer stop portion which impinges on the first or a further distance ring to stop movement of the rod into the cylinder.

As will be described by reference to exemplary embodiments below, the first distance ring is preferably sandwiched between two further distance rings. The distance rings are suitably mounted to a housing of the cylinder by a bolt passing through aligned holes in the distance rings to engage a threaded bore in the housing.

The hydraulic cylinder assembly suitably forms part of a vehicle steering cylinder assembly for a utility vehicle, although other applications in the area of utility vehicles and implements (where debris is prevalent) are contemplated.

The present invention also provides a utility vehicle including a hydraulic cylinder assembly as recited above.

Further advantages of the invention will become apparent from reading the following description of specific embodiments with reference to the appended drawings in which:-
Figure 1 is a representation of a tractor;
Figure 2 is a perspective schematic view of the front steering assembly of a farm tractor;
Figure 3 is a perspective sectional view through part of a steering cylinder from the steering assembly of Fig.2;
Figure 4 is a sectional elevation view through part of a steering cylinder from the steering assembly of Fig.2; and
Figure 5 is a perspective view of part of a steering cylinder from the steering assembly of Fig.2.

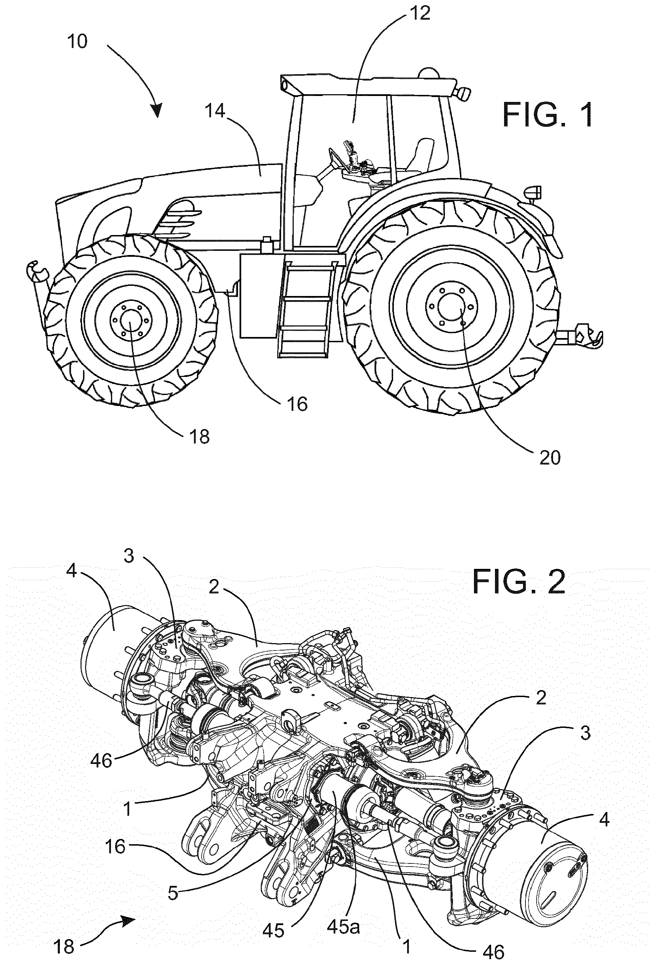

Referring to Figure 1, a utility vehicle in the form of a tractor 10 is shown having a cab 12 and an engine compartment 14. A chassis 16 which is partly visible connects front wheel suspension and steering assembly 18 and rear axle assembly 20.

Figure 2 shows the front suspension and steering assembly 18 of the tractor 10. On each side of the chassis the wheel suspension in known manner comprises a lower transverse link 1 and an upper transverse link 2, each connected to the chassis. A steering housing 3 pivotally arranged about an approximately vertical axis is positioned at the free ends of the transverse links 1 and 2. The wheel hub 4 of a front wheel is located on the steering housing 3 for rotation. A steering cylinder 5 is provided to pivot the steering housing 3. The steering rod (piston) 45 of the steering cylinder 5 is connected in known manner by a track rod 46 to the steering housing 3 of the wheel suspension.

The steering rod 45 features a stop body 45a which projects from the outer surface of the rod and impinges on the housing of the steering cylinder 5 to limit the extent of retraction of the rod into the cylinder. The stop body 45a may be a simple projecting pin or may take other forms, for example a raised annular ridge or collar extending around all or a part of the circumference of the steering rod 45.

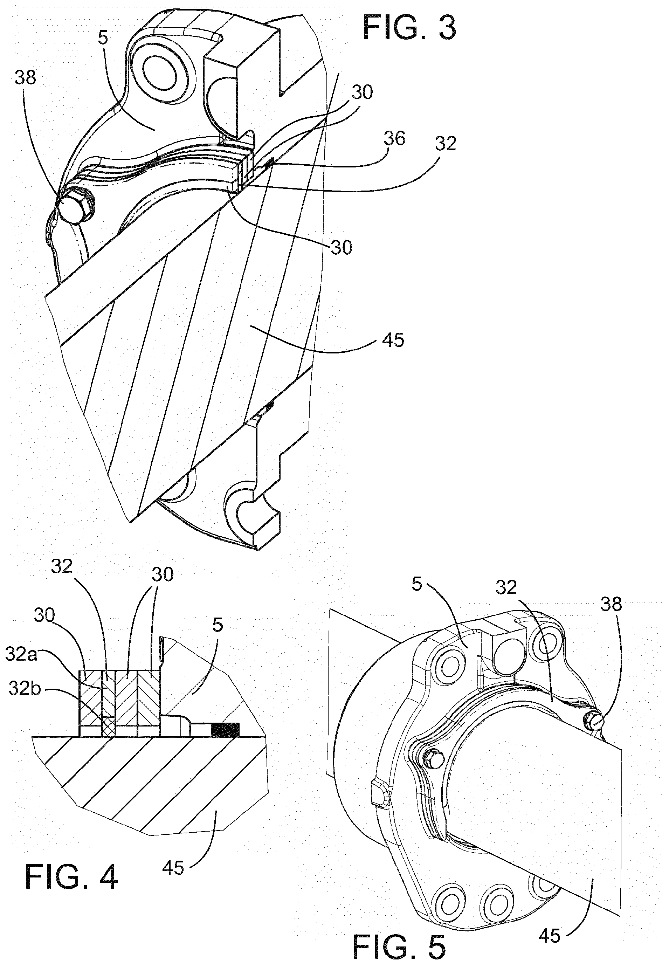

As shown in Figures 3 - 5, the extent of retraction of the steering rod 45 into steering cylinder 5 is further limited by the mounting of one or more distance rings 30 mounted about the steering rod 45 abutting the steering cylinder 5, with the outmost (from the cylinder) distance ring being impinged by the stop body 45a. Each distance ring is a planar body of rigid material (such as steel) having an opening of greater dimension than the cross-section of the steering rod 45. The distance ring may be an annular body or, as shown in Figure 5, the opening may extend to the edge of the body such that the distance ring is U-shaped.

As shown in Figure 3, to prevent debris from entering the interior of the steering cylinder 5 and to prevent oil from discharging, seals 36 are provided within the cylinder about the steering rod 45.

With the distance ring 30 aperture being greater than the diameter of the steering rod 45, debris may enter the annular space between ring and rod and, over time, this may be pushed towards the seals 36 resulting in damage. To address this there is provided a combined sealing and distance ring 32. Like the conventional distance ring 30, the sealing and distance ring 32 is a planar body 32 a of a rigid material having a first opening of greater dimension than the cross-section of the steering rod 45 with which it is to be used. Unlike the conventional distance ring 30, however, the sealing and distance ring 32 is characterised in that within the first opening is attached a second planar body 32b of flexible material, the second planar body having a second opening of substantially identical dimension to that of the cross-section of the steering rod 45. With this arrangement, the sealing and distance ring 32 provides at least coarse debris protection for the steering cylinder seals 36 whilst at the same time adjusting the retraction extent for the steering rod 45.

The outer (rigid) planar body 32a of ring 32 is suitably formed of steel. The inner (flexible) planar body 32b of ring 32 is suitably formed of rubber attached to the outer body 32a by vulcanisation or by known chemical bonding techniques suited for joining rubber to metal.

As with the conventional distance ring, the sealing and distance ring 32 may be an annular article or may be U-shaped. Whilst the former may be preferred for the continuity of sealing all around the steering rod 45, it will require the stop body 45a to be removable to allow the ring 32 to be removed from the rod 45, following disconnection of track arm 46. The latter U-shaped configuration has benefit in terms of ease of removal and replacement and, in a vehicle steering cylinder assembly, it is recommended for the open portion of the U-shape to be downwards (as in Fig. 5) to reduce the likelihood of debris ingress.

Suitably the sealing and distance ring 32 and conventional distance rings 30 have aligned holes enabling the horizontally stacked rings to be attached to the housing of the steering cylinder 5 by one or more bolts 38 extending through the holes to engage corresponding threaded bores in the housing.

Referring to Figures 3 and 4, in a preferred arrangement the rigid part 32a of the sealing and distance ring 32 has a larger internal aperture than that of the conventional distance rings 30. With such construction, in a vehicle steering cylinder assembly, it is preferred for the sealing and distance ring 32 to be mounted sandwiched between two conventional distance rings 30. As can be particularly seen from Figure 4, this arrangement provides additional clamping and support for the joint between the rigid 32a and flexible 32b portions of the sealing and distance ring 32.

In the foregoing the applicants have described a distance ring which is provided for constraining retraction of a hydraulic cylinder in applications including a steering rod in a vehicle suspension. The distance ring comprises an outer body of a rigid material lined by an inner body of flexible material, with the inner body having an opening of substantially identical dimension to that of the cross-section of the steering rod. A vehicle steering cylinder assembly including the distance ring mounts it together with a number of similar but unlined rings to adjust permitted travel of a steering cylinder rod.

From reading of the present disclosure, other modifications will be apparent to those skilled in the art. Such modifications may involve other features which are already known in the field of vehicle steering systems and component parts therefore and which may be used instead of or in addition to features described herein.

## Claims

1. A distance ring (32) for constraining movement of a rod (45) in a hydraulic cylinder, the distance ring comprising a planar body (32a) of a rigid material having a first opening of greater dimension than the cross-section of a rod with which it is to be used, **characterised in that** within the first opening is attached a second planar body (32b) of flexible material, the second planar body having a second opening of substantially identical dimension to that of the cross-section of the rod (45).

2. A distance ring as claimed in claim 1, wherein the first (32a) and second (32b) planar bodies are coplanar.

3. A distance ring as claimed in claim 1 or claim 2, wherein the first and second openings extend to the edge of their respective planar bodies (32a, b) such that the distance ring is U-shaped.

4. A distance ring as claimed in any of claims 1 to 3, wherein the rigid material is steel.

5. A distance ring as claimed in any of claims 1 to 4, wherein the flexible material is rubber.

6. A distance ring as claimed in claim 5, wherein the flexible material is attached to the rigid material by chemical bonding.

7. A distance ring as claimed in claim 5, wherein the flexible material is attached to the rigid material by vulcanisation.

8. A hydraulic cylinder assembly comprising:
- a rod (45) controllably movable into and out of a cylinder (5);
- a first distance ring (32) according to any of claims 1 to 7 mounted to the cylinder (5) about the rod;
- one or more further distance rings (30), not having a second planar body of flexible material, mounted to the cylinder (5) about the steering rod (45) in abutting relationship with the first distance ring (32);
wherein the rod (45) includes an outer stop portion (45a) which impinges on the first (32) or a further (30) distance ring to stop movement of the steering rod (45) into the cylinder (5).

9. A hydraulic cylinder assembly as claimed in claim 8, wherein the first distance ring (32) is sandwiched between two further distance rings (30).

10. A hydraulic cylinder assembly as claimed in claim 8 or claim 9, wherein the first opening in the planar body (32a) of rigid material in the first distance ring (32) is greater in diameter than the first opening in the planar body of rigid material in the or each further distance ring (30).

11. A hydraulic cylinder assembly as claimed in claim 9 or claim 10, wherein the distance rings are mounted to a housing of the cylinder by a bolt (38) passing through aligned holes in the distance rings to engage a threaded bore in the housing.

12. A vehicle steering cylinder assembly including a hydraulic cylinder assembly according to any of claims 8 to 11.

13. A utility vehicle (10) including a vehicle steering cylinder assembly according to claim 12.
